# EUROPEAN PATENT APPLICATION

(11) **EP 1 719 801 A1**
(43) Date of publication of application: **08.11.2006**
(21) Application number: 05709505.1
(22) Date of filing: 31.01.2005
(51) Int. Cl.: C08L 27/12, C08K 3/04

(54) **FLUORINATED ELASTOMER COMPOSITION**

(30) Priority: 26.02.2004 JP 2004051767
(71) Applicant: DAIKIN INDUSTRIES, LTD., Osaka-shi, Osaka 530-8323 (JP)
(72) Inventor: TANAKA, Hiroyuki, Yodogawa-seisakusho, DAIKIN IND, Settsu-shi, Osaka 5668585 (JP); FUKUYAMA, Kouji, Yodogawa-seisakusho, DAIKIN IND., Settsu-shi, Osaka 5668585 (JP)
(74) Representative: HOFFMANN EITLE
(86) International application number: PCT/JP2005/001342
(87) International publication number: WO 2005/082998

(57) **Abstract**

The present invention provides a fluorine-containing elastomer composition which has small weight change for all the treatments of NF₃ plasma, O₂ plasma and CF₄ plasma conducted in a manufacturing process of a semiconductor and significant plasma resistance, and a molded article comprising the fluorine-containing elastomer composition.

## Description

### TECHNICAL FIELD

The present invention relates to a fluorine-containing composition comprising a crosslinkable fluorine-containing elastomer and a carbon allotrope (except for amorphous carbon) having an average primary particle size of at most 0.1 µm.

### BACKGROUND ART

A fluorine-containing elastomer, particularly, a perfluoroelastomer containing tetrafluoroethylene (TFE) as the major unit can be widely used under severe environments due to showing excellent chemical resistance, solvent resistance and heat resistance.

In steps of etching, ashing and chemical vapor deposition (CVD) in the manufacturing process of a semiconductor, plasma equipment is used. In plasma equipment, elastomeric sealing materials are used at various connecting parts and movable parts for sealing. The sealing materials are required to not only have sealing property but also to withstand severe conditions for plasma treatments such as having a high density (10¹² to 10¹³/cm³) due to the miniaturization and the enlargement of a substrate wafer, and not to contaminate a semiconductor in which extremely precise processing is required. In such steps of etching and ashing, high-density O₂ plasma treatment and CF₄ plasma treatment are conducted. Further, for cleaning the inside of the chamber in CVD equipment after a process for forming a thin film by CVD, cleaning by high-density F radical is conducted utilizing NF₃ remote plasma. Therefore, sealing materials are required to have resistance against all the treatment of NF₃ plasma, O₂ plasma and CF₄ plasma.

As an elastomeric material for a sealing material, which can deal with such requirements, materials obtained by compounding an organic or inorganic filler to a crosslinkable fluorine-containing elastomer is suggested, but carbon black, silica (for examples, see JP No. 2783576 and JP No. 2858198), polytetrafluoroethylene (PTFE) powder, titanium oxide powder, clay, talc and barium sulfate, which are conventionally used as fillers, can not give sufficient resistance to all the treatments of NF₃ plasma, O₂ plasma and CF₄ plasma.

Herein, as stable fillers for all the treatments of NF₃ plasma, O₂ plasma and CF₄ plasma, alumina and imide fillers are suggested (for example, see WO 00/64980 and WO 01/32782). Alumina has an advantage of having resistance against both O₂ plasma and CF₄ plasma, but it has a disadvantage of promoting degradation of a fluorine-containing elastomer under NF₃ remote plasma. On the contrary, imide fillers show excellent resistance under NF₃ remote plasma, however, it has a disadvantage of having no resistance under O₂ plasma.

Accordingly, an elastomer composition having a resistance against all the treatments of NF₃ plasma, O₂ plasma and CF₄ plasma has not yet known so far.

The present invention aims to provide a fluorine-containing elastomer composition which have a little weight change for all the treatments of NF₃ plasma, O₂ plasma and CF₄ plasma carried out in a process of manufacturing a semiconductor and a prominent plasma resistance, a molded article comprising the fluorine-containing elastomer composition and a filler for sealing materials in a semiconductor manufacturing equipment comprising specific carbon isotope.

### DISCLOSURE OF INVENTION

Namely, the present invention relates to a fluorine-containing elastomer composition comprising a fluorine-containing elastomer and a carbon allotrope (except for amorphous carbon) having an average primary particle size of at most 0.1 µm.

The carbon allotrope having an average primary particle size of at most 0.1 µm is preferably a diamond.

The fluorine-containing elastomer is preferably a perfluoro elastomer.

The fluorine-containing elastomer composition for an equipment for manufacturing a semiconductor is preferable.

The present invention also relates to molded articles comprising said fluorine-containing elastomer composition and sealing materials.

The present invention further relates to a filler for sealing materials in an equipment of manufacturing a semiconductor comprising a carbon allotrope (except for amorphous carbon) having an average primary particle size of at most 0.1 µm.

### BEST MODE FOR CARRYING OUT THE INVENTION

A fluorine-containing elastomer composition of the present invention comprises a fluorine-containing elastomer and a carbon allotrope having an average primary particle size of at most 0.1 µm, excluding an amorphous carbon as the carbon allotrope.

A carbon allotrope used in the present invention is preferably one which is crystalline in a viewpoint of a plasma resistance. An amorphous carbon such as amorphous carbon, diamond-like carbon and carbon black are not included as the carbon allotrope in the present invention. As the carbon allotrope used in the present invention, examples are carbons such as diamond, graphite, fullerene, carbon nanotube, and carbyne. Among them, diamond is preferable in viewpoints of a bonding strength and high stability.

The electronic states in these carbon allotrope form various hybrid level (sp, sp2, sp3). Diamond is three-dimensional structure of sp3 hybrid orbital, graphite is two-dimensional structure of sp2 hybrid orbital, carbyne is one-dimensional structure of sp hybrid orbital, fullerenes such as C₆₀ and C₇₀ are sp2 hybrid orbital as well as graphite, but a molecule of three-dimensional structure. The structure of the carbon allotrope used in the present invention is preferably two-dimensional structures or three-dimensional structures in a viewpoint of a plasma resistance, more preferably three-dimensional structures.

As diamond, nanodiamond fine powder (made by BEIJING GRISH HITECH CO., LTD), which is artificial diamond, can be preferably used. The nanodiamond has an average primary particle size of 0.004 to 0.008 µm in a globular form and the specific surface area is 390 to 420 m²/g. An element composition is also C (>90 %), O (4 to 6 %), N (1 to 2 %), H (< 1 %).

An average primary particle size of the carbon allotrope used in the present invention is at most 0.1 µm, preferably at most 0.05 µm, more preferably at most 0.01 µm. The lower limit of an average primary particle size is not particularly limited, but preferably at least 0.001 µm. When an average primary particle size is more than 0.1 µm, it becomes a particle having a problem and a defect rate of a semiconductor tends to come down. When being less than 0.001 µm, a handling property tends to deteriorate.

A primary particle is a particle, which can not be separated into any more, a secondary particle is a particle, which comprises cohesive primary articles.

When an average primary particle size of the carbon allotrope used in the present invention is more than 0.1 µm, it is required that the carbon allotrope is pulverized to be an average primary particle size of at most 0.1 µm.

When carbon allotropes having an average primary particle size of at most 0.1 are cohesive to make secondary particle, and the secondary particle is cracked easily or secondary particle size is at most 0.1 µm in making a composition, it can be used as it is. But, in making a composition, being too strong to be cracked easily and secondary particle size is more than 0.1 µm, even if an average primary particle size comprises carbon allotrope of at most 0.1 µm, it is required that the carbon allotrope is pulverized to be an average secondary particle size of at most 0.1 µm.

Examples of the method for pulverizing are jet mill pulverizing (dry pulverization) and the method of preparing a slurry by adding a dispersion medium such as water or an organic solvent, applying pressure to the beads mill and liquid and spraying from a nozzle to counter collide (wet pulverization).

As a form of the carbon allotrope, not particularly limited, a granular is preferable in viewpoints of processing and handling property.

The carbon allotrope (except for amorphous carbon) having an average particle size of at most 0.1 µm used in the present invention can be preferably used as fillers for sealing materials in semiconductor manufacturing equipment.

The fluorine-containing elastomer composition of the present invention can include further a metal compound inorganic filler and/or organic polymer compound filler as fillers, in addition to the carbon allotrope having an average particle size of at most 0.1 µm.

Examples of the metal compound inorganic filler are metal oxides such as silicon oxides including silica and glass, titanium oxide and aluminum oxide; metal sulfates such as barium sulfate, calcium sulfate and aluminum sulfate; metal carbonates such as calcium carbonate; metal carbides such as silicon carbide; and metal nitrides such as silicon nitride and aluminum nitride.

Examples of organic polymer compound filler are imide fillers having an imide structure such as polyimide, poly(amide imide) and poly(ether imide) and organic fillers made of engineering plastic such as polyarylate, polysulfone, poly(ether sulfone), poly(phenylene sulfide), polyether ether ketone and polyoxybenzoate.

The fluorine-containing elastomer that can suitably be used in the present invention is not particularly limited, as long as it is an elastomer that is conventionally used for sealing material, particularly sealing material for a semiconductor manufacturing equipment. As fluorine-containing elastomer, examples are fluorine rubber (a), thermoplastic fluorine rubber (b), and rubber composition comprising these fluorine rubbers.

As fluorine rubber (a), examples are non-perfluoro fluorine rubber (a-1) and perfluoro fluorine rubber (a-2).

As a thermoplastic fluorine rubber (b), examples are fluorine-containing multi-segmented polymer (b-1) comprising an elastomeric fluorine-containing polymer chain segment and a non-elastomeric fluorine-containing polymer chain segment, in which at least 90 % by mol of the structural units of both the elastomeric fluorine-containing polymer chain segment and the non-elastomeric fluorine-containing polymer chain segment are perhalo olefin, fluorine-containing multi-segmented polymer (b-2), in which at least 90 % by mol of the structural units of the elastomeric fluorine-containing polymer chain segment are perhalo olefin and the non-elastomeric fluorine-containing polymer chain segment contains less than 90 % by mol of perhalo olefin as structural units and fluorine-containing multi-segmented polymer (b-3), in which the elastomeric fluorine-containing polymer chain segment contains less than 90 % by mol of perhalo olefin as structural units and at least 90 % by mol of the structural units of the elastomeric fluorine-containing polymer chain segment are perhalo olefin or the non-elastomeric fluorine-containing polymer chain segment contains less than 90 % by mol of perhalo olefin as structural units.

As non-perfluoro fluorine rubber (a-1), examples are vinylidene fluoride (VdF) fluorine rubber, tetrafluoroethylene (TFE) / propylene fluorine rubber, tetrafluoroethylene (TFE)/propylene/vinylidene fluoride (VdF) fluorine rubber, ethylene/hexafluoropropylene (HFP) fluorine rubber, ethylene/hexafluoropropylene (HFP)/vinylidene fluoride (VdF) fluorine rubber, ethylene/hexafluoropropylene (HFP) /tetrafluoroethylene (TFE) fluorine rubber, fluorosilicone fluorine rubber, and fluorophosphazene fluorine rubber. These can be used alone respectively, or in random combinations within the range where the effects of the present invention are not lost.

Vinylidene fluoride fluorine rubber is referred to a fluorine-containing copolymer comprising 45 to 85 % by mole of vinylidene fluoride and 55 to 15 % by mole of at least one kind of other monomer copolymerizable with vinylidene fluoride. It is preferably referred to fluorine-containing copolymer comprising 50 to 80 % by mole of vinylidene fluoride and 50 to 20 % by mole of at least one kind of other monomer copolymerizable with vinylidene fluoride.

As for at least one kind of other monomer copolymerizable with vinylidene fluoride, examples are fluorine-containing monomers such as tetrafluoroethylene (TFE), chlorotrifluoroethylene (CTFE), trifluoroethylene, hexafluoropropylene (HFP), trifluoropropylene, tetrafluoropropylene, pentafluoropropylene, trifluorobutene, tetrafluoroisobutene, perfluoro(alkylvinylether) (PAVE), and vinyl fluoride, and nonfluorine-containing monomers such as ethylene, propylene, and alkylvinyl ethers. These can be used alone respectively, or used in random combinations. Among them, tetrafluoroethylene, hexafluoropropylene, and perfluoro (alkylvinyl ether) are preferable.

Specific examples of rubber are VdF-HFP rubber, VdF-HFP-TFE rubber, VdF-CTFE rubber, and VdF-CTFE-TFE rubber.

Tetrafluoroethylene/propylene fluorine rubber is referred to a fluorine-containing copolymer, comprising 45 to 70 % by mole of tetrafluoroethylene, 55 to 30 % by mole of propylene, and further containing 0 to 5 % by mole of a monomer that gives a crosslinking site based on the total amount of tetrafluoroethylene and propylene.

As monomers to give a crosslinking site, examples are iodine-containing monomers such as perfluoro(6,6-dihydro-6-iodo-3-oxa-1-hexene) and perfluoro(5-iodo-3-oxa-1-pentene) described in JP-B-5-63482 and JP-A-7-316234, bromine-containing monomers described in JP-A-4-505341, cyano group-containing monomers, carboxyl group-containing monomers and alkoxycarbonyl group-containing monomers described in JP-A-4-505345 and JP-A-5-500070.

These non-perfluorofluorine rubbers (a-1) can be prepared by usual method.

As perfluorofluorine rubber (a-2), examples are tetrafluoroethylene/perfluoro(alkylvinyl ether)/a monomer to give a crosslinking site. The composition of tetrafluoroethylene/perfluoro(alkylvinyl ether) is preferably 50 to 90/10 to 50 % by mole, more preferably 50 to 80/20 to 50 % by mole, and further preferably 55 to 70/30 to 45 % by mole. The monomer to give a crosslinking site is preferably 0 to 5 % by mole and more preferably 0 to 2 % by mole based on the total amount of tetrafluoroethylene and perfluoro(alkylvinyl ether). Beyond the scope of these compositions, the properties of rubber elastic body are lost and tend to become closer to these of resin.

As perfluoro(alkylvinyl ether) in this case, examples are perfluoro(methylvinyl ether) and perfluoro(propylvinyl ether), these can be used alone, or used in random combinations.

As monomers to give a crosslinking site, exapmles are vinylidene fluoride, iodine or bromine-containing monomers represented by the general formula (1);

CX¹₂ = CX¹-R_{f}¹CHR¹X² (1)

(wherein X¹ is H, F or CH₃ , R_{f}¹ is a fluoroalkylene group, a perfluoroalkylene group, a fluoropolyoxyalkylene group or a perfluoropolyoxyalkylene group, R¹ is H or CH₃, X² is an iodine atom or a bromine atom); and monomers represented by the general formula (2);

CF₂ = CFO (CF₂CF(CF₃)O)ₘ(CF₂)ₙ-X³ (2)

(wherein m is an integer of 0 to 5, n is an integer of 1 to 3, X³ is a cyano group, a carboxyl group, an alkoxycarbonyl group or bromine atom), these can be used alone, or used in random combinations.

The iodine atom, cyano group, carboxyl group, alkoxycarbonyl group, and bromine atom can function as a crosslinking point.

These perfluorofluorine rubbers (a-2) can be prepared by usual method.

Specific examples of the perfluorofluorine rubber (a-2) are fluorine rubber described in WO 97/24381, JP-B-61-57324, JP-B-4-81608, JP-B-5-13961.

Next, fluorine-containing multi-segmented polymer (b-1), which is thermoplastic fluorine rubber (b) is described below.

An elastomeric fluorine-containing polymer chain segment is explained first. The elastomeric fluorine-containing polymer chain segment give flexibility to polymers and has the glass transition temperature of at most 25°C, and preferably at most 0°C. As perhalo olefinsthat constitute at least 90 % by mole of the structural units, examples are tetrafluoroethylene, chlorotrifluoroethylene, hexafluoropropylene, and perfluorovinyl ether represented by the general formula (3):

CF₂ = CFO (CF₂CFYO)ₚ-(CF₂CF₂CF₂O)_{q}-R_{f}² (3)

(wherein Y is F or CF₃, R_{f}² is a perfluoroalkyl group having 1 to 5 carbon atoms, P is an integer of 0 to 5, and q is an integer of 0 to 5).

Examples of the structural units other than perhalo olefin that constitute the elastomeric fluorine-containing polymer chain segment are fluorine-containing monomers such as vinylidene fluoride, trifluoroethylene, trifluoropropylene, tetrafluoropropylene, pentafluoropropylene, trifluorobutene, tetrafluoroisobutene and vinyl fluoride and nonfluorine-containing monomer such as ethylene, propylene and alkyl vinyl ether.

Example is elastomeric polymer chain comprising tetrafluoroethylene/perfluoro(alkylvinyl ether)/monomer to give a crosslinking site as the preferable examples of the elastomeric fluorine-containing polymer chain segment. The composition of tetrafluoroethylene/perfluoro(alkylvinyl ether) is 50 to 85/50 to 15 % by mole, and the monomer to give a crosslinking site is preferably 0 to 5 % by mole based on the total amount of tetrafluoroethylene and perfluoro(alkylvinyl ether).

Examples are monomers represented by the general formulas (1) and (2) as the monomers to give a crosslinking site, these can be used alone, or used in random combinations.

A non-elastomeric fluorine-containing polymer chain segment is explained. As perhalo olefins that constitute at most 90 % by mole of the structural units, examples are tetrafluoroethylene, chlorotrifluoroethylene, perfluoro(alkylvinyl ether), hexafluoropropylene, a compound represented by the general formula (4):

CF₂ = CF (CF₂)ᵣX⁴ (4)

(wherein r is an integer of 1 to 10, X⁴ is a fluorine atom or a chlorine atom), and perfluoro-2-butene.

As the structural units, other than perhalo olefins that constitute the non-elastomeric fluorine-containing polymer chain segment, examples are the same structural units as those other than perhalo olefins that constitute the elastomeric fluorine-containing polymer chain segment.

As the preferable examples of the non-elastomeric fluorine-containing polymer chain segment, example is a non-elastomeric polymer chain comprising 85 to 100 % by mole of tetrafluoroethylene and 0 to 15 % by mole of a compound represented by the general formula (5):

CF₂ = CF-R_{f}³ (5)

(wherein R_{f}³ is R_{f}⁴ or -OR_{f}⁴, R_{f}⁴ is a perfluoroalkyl group having 1 to 5 carbon atoms).

The fluorine-containing multi-segmented polymer (b-1) preferably comprises 50 to 95 % by weight of elastomeric fluorine-containing polymer chain segment and 5 to 50 % by weight of non-elastomeric fluorine-containing polymer chain segment.

The fluorine-containing multi-segmented polymer (b-2) is described.

The elastomeric fluorine-containing polymer chain segment in this case is sufficient to be the same as that given for the fluorine-containing multi-segmented polymer (b-1).

As structural units of the non-elastomeric fluorine-containing polymer chain segment, examples are vinylidene fluoride, vinyl fluoride, trifluoroethylene, a compound represented by the general formula (6):

CH₂ = CX⁵-(CF₂)ₛ-X⁵ (6)

(wherein X⁵ is a hydrogen atom or a fluorine atom, and s is an integer of 1 to 10), and partially-fluorinated olefins such as CH₂ = C(CF₃)₂.

Monomers copolymerizable with these monomers such as ethylene, propylene, vinyl chloride, vinyl ethers, vinyl carboxylate, and acrylic acid can be used as a copolymerization component.

The fluorine-containing multi-segmented polymer (b-2) preferably comprises 50 to 95 % by weight of elastomeric fluorine-containing polymer chain segment and 5 to 50 % by weight of non-elastomeric fluorine-containing polymer chain segment.

Fluorine-containing multi-segmented polymer (b-3) is explained below.

The elastomeric fluorine-containing polymer chain segment in fluorine-containing multi-segmented polymers (b-3) is a polymer chain having a glass transition temperature of at most 25°C, and preferably of at most 0°C.

The elastomeric fluorine-containing polymer chain segment contains less than 90 % by mole of perhalo olefins as structural units. As structural units other than the perhalo olefins in this case, example is the same structural units as those other than the perhalo olefins in the fluorine-containing multi-segmented polymer (b-1).

The non-elastomeric fluorine-containing polymer chain segment in the fluorine-containing multi-segmented polymer (b-3) may be the same as the non-elastomeric fluorine-containing polymer chain segment in the above described fluorine-containing multi-segmented polymers (b-1) and (b-2).

The fluorine-containing multi-segmented polymer (b-3) preferably comprises 40 to 95 % by weight of elastomeric fluorine-containing polymer chain segment and 5 to 60 % by weight of non-elastomeric fluorine-containing polymer chain segment.

It is important that thermoplastic fluorine rubber (b) is a fluorine-containing multi-segmented polymer, in which elastomeric fluorine-containing polymer chain segment and non-elastomeric fluorine-containing polymer chain segment are bonded by blocking or grafting in each molecule.

The crystal melting point of non-elastomeric fluorine-containing polymer chain segment in the obtained thermoplastic fluorine rubber (b) is preferably at least 150°C, more preferably 200 to 360°C in a viewpoint of heat resistance.

For the process for preparing the thermoplastic fluorine rubber (b), various known methods can be employed to obtain a fluorine-containing multi-segmented polymer by connecting the elastomeric segment and the non-elastomeric segment by blocking or grafting. Particularly, the process for preparing a block-type fluorine-containing multi-segmented polymer described in JP-B-58-4728 and the process for preparing a graft-type fluorine-containing multi-segmented polymer described in JP-A-62-34324 are preferably employed.

Particularly, in a viewpoint that a homogenous and regular segmented polymer having a high segmentation ratio (block ratio) can be obtained, block-type fluorine-containing multi-segmented polymer, which is synthesized with so-called the iodine transfer polymerization method described in JP-B-58-4728 and KOBUNSHI RONBUNSHU Japanese Journal of Polymer Science and Technology (Vol. 49, No. 10, 1992) is preferable.

In the case that a mere mixture of an elastomeric fluorine-containing polymer and a non-elastomeric fluorine-containing polymer is used, usually, mechanical properties (particularly in high temperatures) are insufficient and abrasion resistance, flexibility and durability decrease, although the effects differ according to the type, mixing properties and compatibility of the polymers that are mixed.

On the other hand, by preparing a multi-segmented polymer by bonding the elastomeric segment and the non-elastomeric segment by blocking or grafting, heat resistance and mechanical properties (particularly in high temperatures) are improved in comparison to a mere mixture of an elastomeric fluorine-containing polymer and a non-elastomeric fluorine-containing polymer.

The elastomeric fluorine-containing polymer segment can be prepared by the iodine transfer polymerization method, which is known as a process for preparing fluorine rubber. An example is the method of emulsion polymerizing perhalo olefin and when necessary, a monomer that gives a curing site in the presence of an iodine compound, preferably a diiodine compound, in an aqueous medium under pressure while stirring in the presence of a radical initiator in a substantially oxygen-free atmosphere. Representative example of diiodine compound used is a compound represented by

R²IₓBr_{y} (7)

(wherein, x and y are integers of 0 to 2, and satisfying 1 ≤ x + y ≤ 2, R² is saturated or unsaturated fluorohydrocarbon group or chrolofluoro hydrocarbongroup, or hydrocarbon group having carbon number of 1 to 3, oxygen atom may be included). The fluorine-containing elastomer is prepared in the presence of this compound. The iodine and bromine introduced in this way function as a crosslinking point.

As compounds represented by the formula (7), examples are 1,3-diiodoperfluoropropane, 1,3-diiodo-2-chloroperfluoropropane, 1,4-diiodoperfluorobutane, 1,5-diiodo-2,4-dichloroperfluoropentane,1,6-diiodoperfluorohexane, 1,8-diiodoperfluorooctane, 1,12-diiodoperfluorododecane, 1,16-diiodoper fluorohexadecane, diiodomethane, 1,2-diiodoethane, 1,3-diiodo-n-propane, CF₂Br2, BrCF2CF2Br, CF₃CFBrCF2Br, CFC1Br₂, BrCF₂CFC1Br, CFBrC1CFC1Br, BrCF₂CF₂CF₂Br, BrCF₂CFBrOCF₃, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1, 2-bromo-4-iodoperfluorobutane-1, monoiodomonobromo-substituted benzene, diiodinemonobromo-substituted benzene, and (2-iodineethyl) and (2-bromoethyl)-substituted benzene, these compounds can be used alone, or arbitrarily combined to be used.

Among these, 1, 4-diiodoperfluorobutane and diiodomethane are preferably used in viewpoints of polymerization reactivity, crosslinking reactivity, and easiness of availability.

The amount of diiodine compound to be added is preferably 0.0001 to 5 % by weight based on the total weight of fluorine rubber in case that the fluorine-containing elastomer is fluorine rubber (a). In case that fluorine-containing elastomer is thermoplastic fluorine rubber (b), 0.0001 to 5 % by weight is preferable as well.

Radical polymerization initiators used in the present invention are sufficient to be the same as ones which are conventionally used in the polymerization of fluorine-containing elastomers. Examples of these initiators are organic and inorganic peroxides, and azo compounds. As a typical initiator, examples are persulfates, carbonates peroxides, and esters peroxides, and as a preferable initiator, an example is ammonium persulfate (APS). APS may be used alone, or used by combining with a reducing agent such as sulphites and sulfite salts.

The emulsifier used in the emulsion polymerization can be selected from a wide range, but in viewpoints of inhibiting the chain transfer reaction to the emulsifier molecule during polymerization, salts of carboxylic acid having fluorocarbon chain or fluoropolyether chain is desirable. The amount of emulsifier is preferably about 0.05 to 2 % by weight of water added, particularly preferably 0.2 to 1.5 % by weight.

The monomer mixed gas used in the present invention is explosive, as described in Advances in Chemistry Series, 129,13(1973) by G.H. Kalb et al. Therefore it is important that polymerization device is designed not to generate such as spark, which is ignition source.

Polymerization pressure can be changed in a wide range, generally in the range of 0.5 to 5 MPa. The higher polymerization pressure is, the higher polymerization rate is, therefore polymerization pressure of at least 0.8 MPa is preferable in viewpoints of improvement in productivity.

In the case of preparing elastomeric fluorine-containing polymer chain segment of thermoplastic fluorine rubber (b) by the iodine transfer polymerization method, the number average molecular weight of an elastomeric fluorine-containing polymer chain segment thus obtained is preferably 5,000 to 750,000 and more preferably 20,000 to 400,000 in viewpoints of imparting flexibility, elasticity, mechanical properties to the entire fluorine-containing multi-segmented polymer thus obtained.

The terminal part of the elastomeric fluorine-containing polymer chain segment thus obtained is a perhalo-type and has an iodine atom which is an initiation point for block copolymerization of the non-elastomeric segment.

The block copolymerization of non-elastomeric fluorine-containing polymer chain segment to elastomeric fluorine-containing polymer chain segment can be carried out by changing a monomer to one for non-elastomeric fluorine-containing polymer chain segment in succession to the emulsion polymerization of elastomeric fluorine-containing polymer chain segment.

The number average molecular weight of the obtained non-elastomeric segment is preferably 1,000 to 1,200,000 and, more preferably 3,000 to 600,000.

The thermoplastic fluorine rubber (b) obtained in this way is composed mainly of polymer molecules in which non-elastomeric fluorine-containing polymer chain segments are bonded to both sides of the elastomeric fluorine-containing polymer chain segment and polymer molecules in which a non-elastomeric fluorine-containing polymer chain segment is bonded to one side of the elastomeric fluorine-containing polymer chain segment. The amount of polymer molecules comprising elastomeric segments only, to which non-elastomeric segments are not bonded, is at most 20 % by weight, preferably at most 10 % by weight, based on the total amount of polymer molecules and segments in the fluorine-containing multi-segmented polymer.

In the present invention, a composition comprising of fluorine rubber (a) and thermoplastic fluorine rubber (b) as described above can be used.

The first fluorine rubber composition comprising the non-perfluoro fluorine rubber (a-1) and the fluorine-containing multi-segmented polymer (b-1) can be obtained by mixing the non-perfluoro fluorine rubber (a-1) and the fluorine-containing multi-segmented polymer (b-1) as a dispersion or in any ratio by dry blending with an open roll.

Also, in order to improve mold release properties when molding, additives such as an internal mold release agent can be added accordingly as long as the effects of the present invention are not lost. A crosslinking agent can be added depending on the type of the crosslinking method described below.

The second fluorine rubber composition comprising non-perfluoro fluorine rubber (a-1) and fluorine-containing multi-segmented polymer (b-2), the third fluorine rubber composition comprising perfluoro fluorine rubber (a-2) and fluorine-containing multi-segmented polymer (b-3), the fourth fluorine rubber composition comprising of perfluoro fluorine rubber (a-1) and fluorine-containing multi-segmented polymer (b-2), and a fifth fluorine rubber composition comprising perfluoro fluorine rubber (a-2) and fluorine-containing multi-segmented polymer (b-1) can be obtained in the same manner as the first fluorine rubber composition.

In this case, the above additives can be added accordingly as long as the effects of the present invention are not lost and a crosslinking agent can be added depending on the type of the crosslinking method described below.

Both the perfluoro fluorine rubber (a-2) and the fluorine-containing multi-segmented polymer (b-1) are poor in crosslinking efficiency by radiation and substantially cannot be crosslinked by radiation. Therefore in the case of crosslinking fifth fluorine rubber composition, at least one of the rubbers is introduced crosslinking site, with which peroxide crosslinking can be conducted, and then crosslinking must be conducted.

As fluorine rubber, in which crosslinking site is introduced, a fluorine rubber, in which iodine atom or bromine atom is introduced into the polymer terminal, is preferable. The fluorine rubber can be prepared by the iodine transfer polymerization method.

As the amount of compound represented by the general formula (7), 0.0001 to 5 % by weight of the total weight of obtained fluorine rubber is sufficient, further preferably 0.01 to 1 % by weight.

An example of other method for introducing crosslinking site is for the method of copolymerizing a small amount of a monomer to give a crosslinking site. An example of monomers to give a crosslinking site can be ones as described above.

As the fluorine-containing elastomer, fluorine-containing silicone elastomer such as fluoro silicone rubber can be also used.

In the present invention, as fluorine-containing elastomer, using perfluoro elastomer is preferable in a viewpoint of heat resistance. Herein, the Perfluoro elastomer is one comprising at least of 90 % by mol of perfluoromonomer as a structural unit.

In the fluorine-containing elastomer composition in the present invention, the amount of a carbon allotrope having an average primary particle size of at most 0.1 µm is preferably 1 to 50 parts by weight, more preferably 3 to 20 parts by weight based on 100 parts by weight of fluorine-containing elastomers. When the amount of carbon allotrope having an average primary particle size of at most 0.1 µm is less than 1 part by weight based on 100 parts by weight of fluorine-containing elastomers, the effectiveness as fillers is hardly expected. When being more than 50 parts by weight, the composition becomes high hardness and it is not preferable to use fluorine-containing elastomer of the present invention as a sealing material.

To the fluorine-containing elastomer composition of the present invention, crosslinking agents can be added, if necessary.

The crosslinking agents, which are compounded to the fluorine-containing elastomer composition, may be suitably selected depending on the type of crosslinkable groups (cure sites) of the fluorine-containing elastomer.

For example, when crosslinkable group of fluorine-containing elastomer is iodine atom, peroxide crosslinking system is preferable. When crosslinkable group of fluorine-containing elastomer is nitryl group, triazine crosslinking system, oxazole crosslinking system, imidazole crosslinking system and thiazole crosslinking system are preferable. When crosslinkable group of fluorine-containing elastomer is carboxyl group or alkoxycarbonyl group, oxazole crosslinking system, imidazole crosslinking system and thiazole crosslinking system are preferable. When fluorine-containing elastomer does not also include crosslinkable group, crosslinking is preferable to be conducted by radiation. In the case of vinylidene fluorine-containing elastomer, polyol crosslinking system and polyamine crosslinking system can be also preferably also used.

The crosslinking agents used in peroxide crosslinking is sufficient to be organic peroxides, which can easily generate peroxy radical in the presence of heat or an oxidization-reduction system. Specific examples are 1,1-bis(t-butyl peroxy)-3,5,5-trimethylcyclohexane, 2,5-dimethyl hexane-2,5-dihydroperoxide, di-t-butylperoxide, t-butylcumylperoxide, dicumylperoxide, α, α-bis(t-butylperoxy)-p-diisopropylbenzene, 2,5-dimethyl-2,5-di(t-buthylperoxy)hexane, 2,5-dimethyl-2,5-di(t-butylperoxy)-hexyne-3,benzoylperoxide, t-butylperoxybenzene, 2,5-dimethyl-2,5-di(benzoylperoxy)hexane, t-butylperoxy maleic acid, t-butylperoxy isopropyl carbonate. Among them, dialkyl types are preferable. Further, 2,5-dimethyl-2,5-di(t-butylperoxy)hexane are especially preferable. The type and amount of the organic peroxide are selected in consideration of the amount of active -O-O-, and decomposition temperature.

As crosslinking aids, which can be used in this case, compounds, which have reaction activity to peroxy radical and polymer radical is sufficient. Examples are multifunctional compounds having a functional group such as CH₂=CH-, CH₂=CHCH₂-, CF₂=CF-. Specific examples are triallyl cyanurate, triallyl isocyanurate (TAIC), triacrylformal, triallyl trimellitate, N,N'-n-phenylenebismaleimide, dipropargyl terephthalate, diallyl phthalate, tetraallylterephthalateamide, triallyl phosphate, bismaleimide, fluorinated triallylisocyanurate(1,3,5-tris(2,3,3-trifluoro-2propenyl)-1,3,5-triazine-2,4,6-trione), tris(diallylamine)-S-triazine, triallyl phosphite, N,N-diallylacrylamide, 1,6-divinyldodecafluorohexane.

As crosslinking agents used for polyol crosslinking, examples are polyol compounds such as bisphenol A, bisphenol AF.

As crosslinking agents used for polyamide crosslinking, examples are polyvalent amine compounds such as hexamethylenediamine carbamate, N,N'-dicinnamylidene-1,6,hexanediamine, 4,4'-bis(aminocyclohexyl)methanecarbamate.

As crosslinking agents used for triazine crosslinking, examples are organic tin compounds such as tetraphenyl tin and triphenyl tin.

As crosslinking agents used for oxazole crosslinking, imidazole crosslinking and thiazole crosslinking, examples are a bisdiaminophenyl crosslinking agent, a bisaminophenol crosslinking agent and a bisaminothiophenol crosslinking agent represented by the general formula (8): 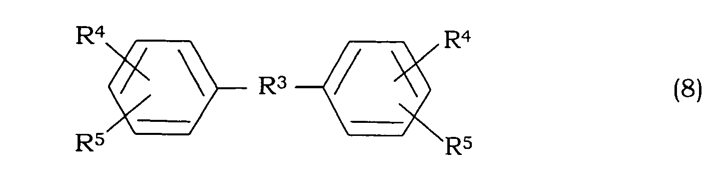 (wherein R³ is -SO₂-, -O-, -CO-, an alkylene group having 1 to 6 carbon numbers, a perfluoroalkylene group having 1 to 10 carbon numbers, or a single bond, as for R⁴ and R⁵, one of them is -NH₂ and the other is -NHR⁶, -NH₂, -OH, or -SH, R⁶ is a hydrogen atom, a fluorine atom, or a monovalent organic group, and preferably, R⁴ is -NH₂ and R⁵ is -NHR⁶), a bisamidorazone crosslinking agent represented by the general formula (9): 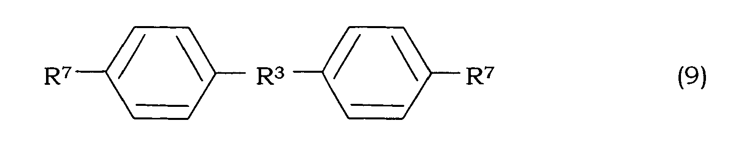 (wherein R³ is the same as described above, and R⁷ is 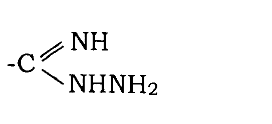 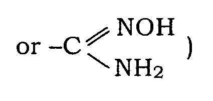 and a bisamidoxime crosslinking agent represented by the general formulas (10) or (11): 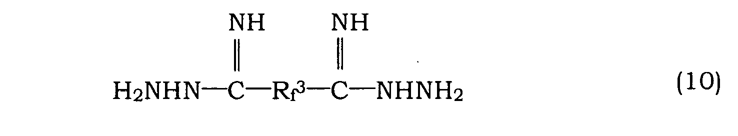 (wherein R_{f}³ is a perfluoroalkylene group having 1 to 10 carbon numbers); 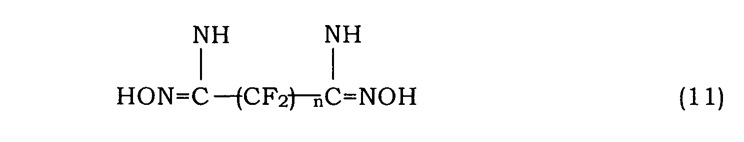 (wherein n is an integer of 1 to 10). These bisaminophenol crosslinking agents, bisaminothiophenol crosslinking agents and bisdiaminophenyl crosslinking agents have conventionally been used in crosslinking systems wherein the crosslinking site is a cyano group, but also react with a carboxyl group and an alkoxycarbonyl group and form an oxazole ring, thiazole ring and an imidazole ring to give a crosslinked article.

A particularly preferable crosslinking agent, examples are compounds having several 3-amino-4-hydroxyphenyl groups or several 3-amino-4-mercaptophenyl groups and a compound represented by the general formula (12): 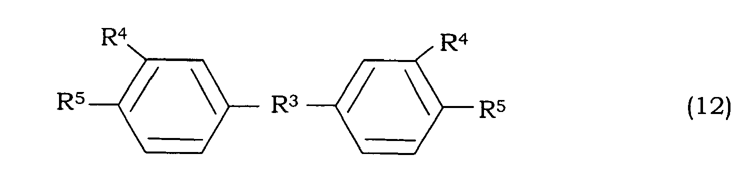 (wherein R³, R⁴, and R⁵ are the same as mentioned above). Specific examples are such as 2,2-bis(3-amino-4-hydroxyphenyl)hexafluoropropane (generic name: bis(aminophenol)AF), 2,2-bis(3-amino-4-mercaptophenyl)hexafluoropropane, tetraaminobenzene, bis-3,4-diaminophenylmethane, bis-3,4-diaminophenyl ether, 2,2-bis(3,4-diaminophenyl)hexafluoropropane and 2,2-bis[3-amino-4-(N-phenylamino)phenyl]hexafluoropropane.

The amount of crosslinking agents in the above crosslinking system is generally 0.05 to 10 parts by weight, preferably 1 to 5 parts by weight based on 100 parts by weight of the fluorine-containing elastomer. When the amount of crosslinking agents is less than 0.05 parts by weight, the fluorine-containing elastomer is apt not to be crosslinked sufficiently. When the amount of crosslinking agents is more than 10 parts by weight, the properties of crosslinked article tend to become poor.

When using crosslinking aids, the amount of them is generally 0.1 to 10 parts by weight, preferably 0.5 to 5 parts by weight based on 100 parts by weight of the fluorine-containing elastomer. When the content of the crosslinking aids is less than 0.1 part by weight, the fluorine-containing elastomer are apt not to be crosslinked sufficiently, when the content of crosslinking aids is more than 10 parts by weight, the elongation of crosslinked article tend to decrease.

For uses in which non-contaminating properties are strongly desired such as semiconductor manufacturing equipment, crosslinking by high-energy beam is preferable conducted without adding crosslinking agents.

When crosslinking by radiation, as a compounding agent for crosslinking by radiation, the same compounds as those used for a crosslinking aid in peroxide crosslinking can be compounded. In the case of compounding these, the amount is preferably 0.1 to 10 parts by weight, especially preferably 0.3 to 5 parts by weight based on 100 parts by weight of the polymer.

In crosslinking by radiation, the fluorine-containing elastomer comprising fluorine-containing elastomer and carbon allotrope is molded into desired shape, thereafter irradiated by ionizing radiation which has sufficient high energy to permeate into the molded article, such as X-rays, α-rays, β-rays, γ-rays, electron beams, proton beams, deuteron rays and ultraviolet rays. Irradiation can be conducted in the presence of air, nitrogen, argon or helium or in vacuum. From the viewpoint of preventing oxidization and degradation of the surface of the molded article, irradiation is preferably conducted under oxygen-free, especially under nitrogen, argon or helium, which are inert gases, more preferably in vacuum.

As the ionizing radiation machine, those conventionally used can be used.

In the present invention, in fields in which high purity and non-contaminating properties are not particularly required, additives that are usually compounded in a fluorine-containing elastomer composition, such as a filler, a processing aid, a plasticizer and a colorant, can be compounded when necessary. At least one type of a commonly used crosslinking agent and a crosslinking aid that differ from those described above may also be compounded.

Further, the fluorine-containing elastomer composition of the present invention can be compounded with organic pigment, when necessary.

As the organic pigment, isoindolinone, quinacridone, diketopyrrolopyrrole, anthraquinone are preferably in viewpoints of excellence in heat resistance and chemical resistance and small influence on characteristics of molded articles.

Specific examples are 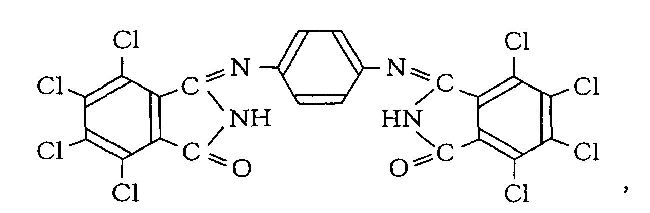 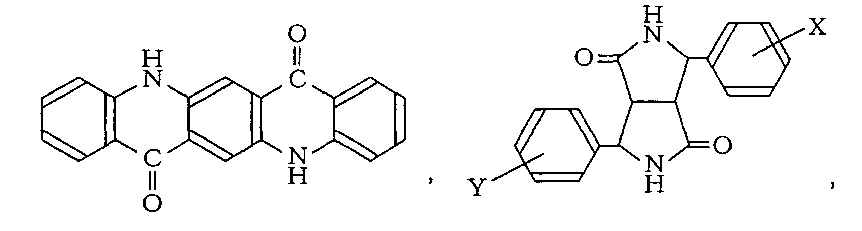 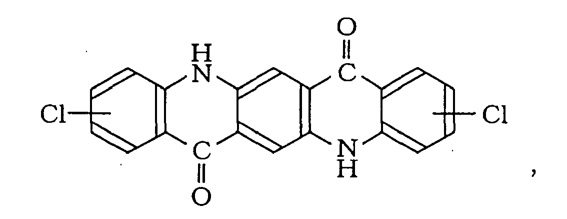 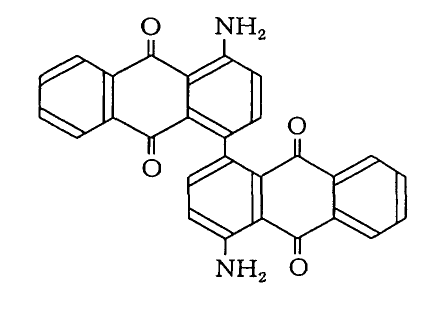 , not limited to them.

The organic pigments have an antiaging effect against plasma and stable in both fluorine plasma treatment and oxygen plasma treatment. Therefore, by adding these pigments to the fluorine-containing elastomer composition, the fluorine-containing elastomer composition of the present invention has small weight decrease by decomposition of these pigments, further can provide molded articles without generation of particles.

The amount of the organic pigments to be added is not especially limited, within the range where the effects of the present invention are not lost.

The fluorine-containing elastomer composition of the present invention can be prepared by mixing the components described above such as the fluorine-containing elastomer and carbon allotrope, further when necessary, metal compound inorganic filler and/or organic polymer compound filler and crosslinking agents using the usual elastomer processing machine such as an open roll, a Banbury mixer and a kneader. The composition can also be prepared by the method of using an internal mixer and the method of co-coagulating from an emulsion mixture.

The fluorine-containing elastomer composition of the present invention can be available as molding materials for various molded articles, or coating materials for various elastomeric molded articles. The fluorine-containing elastomer composition of the present invention is used especially for molded articles for plasma process in semiconductor manufacturing process.

The method for obtaining pre-molded article using the fluorine-containing elastomer composition of the present invention may be sufficient to be the usual method, it can be carried out with publicly known methods such as the method of heat compressing in a metal die, the method of injecting into a heated metal die and the method of extruding with an extruder. Extruded products such as a hose and electric wire can maintain its form after extrusion and therefore, the extruded pre-molded article can be used as it is without using a crosslinking agent. A pre-molded article using a crosslinking agent and subjected to heat crosslinking by steam can also be used. Also, in the case that maintaining the shape of a molded article such as an O-ring is difficult in an uncrosslinked state after mold-releasing, the article can maintain the shape by using a pre-molded article that is crosslinked in advance using a crosslinking agent.

When conducting peroxide crosslinking, peroxide crosslinking can be conducted under the usual crosslinking condition of a fluorine-containing elastomer. For example, the fluorine-containing elastomer composition is put into metal die, and held for 1 to 60 minutes at the degree of 120 to 200°C under pressure to conduct press crosslinking, subsequently held for 0 to 48 hours in an oven to conduct oven crosslinking, to obtain a crosslinked article.

When conducting oxazole crosslinking using a crosslinking agent such as bisaminophenol, crosslinking can be conducted under the usual crosslinking conditions of a fluorine-containing elastomer. For example, the fluorine-containing elastomer composition is put into metal die, and held for 1 to 60 minutes at the degree of 120 to 250°C under pressure to conduct press crosslinking, subsequently held for 0 to 48 hours at the degree of 120 to 320°C in an oven to conduct oven crosslinking, to obtain crosslinked product. Publicly known crosslinking method, for example, bis(aminophenol) AF is added to elastomer such as compound for polyamine crosslinking, polyol crosslinking and peroxide crosslinking to conduct combined crosslinking, can be conducted.

Imidazole crosslinking, wherein carboxyl group is crosslinked with bisdiaminophenyl crosslinking agent is most suitable for carboxyl-containing polymer which have carboxyl group in an area other than the terminal, gives a crosslinked article having favorable properties at the degree of relatively low crosslinking temperature (for example 150 to 230°C, preferably 170 to 200°C).

For uses in which non-contaminating properties are strongly desired such as semiconductor manufacturing equipment, crosslinking by high-energy beam is preferably conducted without using a crosslinking agent. As the crosslinking source, X-rays, α-rays, β-rays, γ-rays, electron beams, proton beams, deuteron rays and ultraviolet rays are used. In such a case, the irradiation amount is preferably 0.1 to 50 Mrad. The irradiation temperature is preferably 20 to 100°C. Irradiation can be conducted in the presence of air, nitrogen, argon or helium or in vacuum. From the viewpoint of preventing oxidization and degradation of the surface of the molded article, irradiation is preferably conducted under oxygen-free, especially under nitrogen, argon or helium, which are inert gases, more preferably in vacuum.

The fluorine-containing elastomer composition of the present invention and molding materials are crosslinked and molded to obtain molded article of the present invention. Furthermore, the elastomeric molded article can be coated with the above coating material using the fluorine-containing elastomer composition of the present invention and then crosslinked to obtain a coated molded article.

As the elastomeric molded article to be coated, articles, which are made with various elastomeric materials can be used, fluorine-containing elastomer and silicone elastomer can be preferably used especially in viewpoint of heat resistance.

The molded article and coated molded article of the present invention are available as various molded article in the several fields. They can be especially imbedded in semiconductor manufacturing equipment as the followings and used.
(1) Etching system
   Dry etching equipment
   Plasma etching machine
   Reactive ion etching machine
   Reactive ion beam etching machine
   Sputter etching machine
   Ion beam etching machine
   Wet etching equipment
   Ashing equipment
(2) Cleaning system
   Dry etching cleaning equipment
   UV/03 cleaning machine
   Ion beam cleaning machine
   Laser beam cleaning machine
   Plasma cleaning machine
   Gas etching cleaning machine
   Extractive cleaning equipment
   Soxhlet extractive cleaning machine
   High temperature high pressure extractive cleaning machine
   Microwave extractive cleaning machine
   Supercritical extractive cleaning machine
(3) Exposing system
   Stepper
   Coater/developer
(4) Polishing system
   CMP equipment
(5) Film forming system
   CVD equipment
   Sputtering equipment
(6) Diffusion/Ion implantation system
   Oxidation and diffusion equipment
   Ion implantation equipment

The molded articles of the present invention have excellent performance as sealing materials for such as CVD equipment, plasma etching machines, reactive ion etching machines, ashing equipment or excimer laser exposing machines, in which plasma treatments such as NF₃ plasma treatments, O₂ plasma treatments, fluorine plasma treatments is conducted.

The present invention will be explained with examples, not limited only to the examples.

### EXAMPLE 1

2 parts by weight of triallylisocyanurate (TAIC), 1 part by weight of 2,5-dimethyl-2,5-di(t-butylperoxy)hexane (available from NOF Corporation, Perhexa 25B), 15 parts by weight of nanodiamond (available from BEIJING GRISH HITECH CO., LTD, an average particle size is 4 to 8 nm, a specific surface area is 390 to 420 m²/g) were mixed, based on 100 parts by weight of fluorine-containing elastomer (perfluoro elastomer containing iodine atom as a crosslinking group (available from Daikin Industries, Ltd., DAI-EL Perflo GA-105), and kneaded by an open roll to obtain crosslinkable fluorine-containing elastomer composition.

This fluorine-containing elastomer composition was pressed at 160°C for 7 minutes to conduct crosslinking, thereafter oven crosslinked in an oven at 180°C for 4 hours to prepare test samples of O-ring (P-24) and sheet (the thickness of 120 mm × 150 mm × 2 mm). The vulcanizing property of the composition and weight reduction at irradiating plasma of the test samples were measured with a method as the followings. The result is shown in table 1.

| (Standard compounding) | |
|---|---|
| fluorine-containing elastomer | 100 parts by weight |
| triallyl isocyanurate(TAIC) | 2 parts by weight |
| Perhexa 25B | 1 part by weight |
| carbon allotrope | 15 parts by weight |
| (Standard vulcanizing condition) kneading method: | roll kneading |
| press vulcanization: | at 160°C for 7 minutes |
| oven vulcanization: | at 180°c for 4 hours |

### <Vulcanizing property>

Vulcanization curve at 150°C is found with JSR type Curelastometer type II to find minimum viscosity (kgf), maximum viscosity (kgf), induction time (minute) and optimum vulcanization time (minute).

### <Test of physical properties>

Test piece is cut off from sheet to measure 100 % of tensile stress (kgf/cm²), tensile strength (kgf/cm²), elongation (%), and hardness (SHORE A) with JIS 6 (ISO No. 2) super dumbbell.

### <Plasma resistance>

Sample: O-ring (P-24)

The obtained molded article was subjected to plasma irradiation treatment under the following conditions and the weight before and after irradiation was measured to find the change in weight.

### 1. High-density F radical cleaning resistance test

Plasma irradiation device:
ASTRON fluorine atom generator (made by ASTEX)
SiO₂ etching rate: SiO₂ etching rate is 1590 Å/minute under NF₃/Ar 500 SSCM, pressure of 5 Torr and temperature of 100°C.

Irradiation conditions:
NF₃/Ar: 1SLM/1SML
Pressure: 3 Torr
Irradiation temperature: 150°C
Irradiation time: 2 hours

Weight measurement:
Weight measurement: Measurement was conducted to 0.01 mg using an electronic analysis scale 2006 MPE made by Sertorious GMBH and the 0.01 mg column was rounded off.
Three samples of each kind were used and the average value of rate of decrease in weight was calculated.

### 2. High density O₂ plasma resistance test

Plasma irradiation device:
ICP high-density plasma machine (made by Samco International)

Irradiation conditions:
O₂: 16 SCCM
Pressure: 2.66 Pa
Output power: 800 W
Irradiation time: 20 minutes

### 3. High density CF₄ plasma resistance test

Plasma irradiation device:
ICP high-density plasma machine (made by Samco International)

Irradiation conditions:
CF₄: 16 SCCM
Pressure: 2.66 Pa
Output power: 800 W
Irradiation time: 20 minutes

### EXMAPLE 2

The example 2 was conducted in the same manner as in Example 1, except that nanodiamond was changed into fullerene (C60: an average primary particle size (molecule size) of about 0.001 µm, an average secondary particle size of about 50 nm (0.05 µm)).

### COMPARATIVE EXAMPLE 1

The comparative example 1 was conducted in the same manner as in Example 1, except that nanodiamond was changed into carbon black (available from Cancarb N-990). The vulcanizing property, test of physical properties and weight decrease at irradiating plasma of the test sample were measured with above method. The result is shown table 1.

### COMPARATIVE EXAMPLE 2

Comparative example 2 was conducted in the same manner as in Example 1, except that nanodiamond was changed into θ alumina (available from Sumitomo Chemical Co., Ltd., AKP-G008) having a primary particle size of 0.015 µm. The vulcanizing property, test of physical properties, and weight decrease at irradiating plasma of the test sample were measured with above method. The result is shown in table 1.

**TABLE 1**

| | Ex.1 | Ex.2 | Com. Ex.1 | Com. Ex.2 |
|---|---|---|---|---|
| <Compounding> | | | | |
| DAI-EL Perflo GA-105 | 100 | 100 | 100 | 100 |
| TAIC | 2 | 2 | 2 | 2 |
| Perhexa 2.5B | 1 | 1 | 1 | 1 |
| Nanodiamond | 15 | | | |
| fullerene (C60) | | 15 | | |
| carbon black N-990 | | | 15 | |
| alumina AKP-G008 | | | | 15 |

| <Test results> | | | | |
|---|---|---|---|---|
| Vulcanization curve at 150°C | | | | |
| minimum viscosity (kgf) | 0.24 | 0.20 | 0.20 | 0.20 |
| maximum viscosity (kgf) | 2.89 | 4.50 | 5.30 | 5.30 |
| induction time (minute) | 2.0 | 1.5 | 1.0 | 1.0 |
| vulcanization time (minute) | 9.5 | 2.8 | 2.0 | 2.0 |

| Physical properties, Original | | | | |
|---|---|---|---|---|
| 100 % of tensile stress (kgf/cm²) | 180 | 120 | 105 | 105 |
| tensile strength (kgf/cm²) | 192 | 205 | 270 | 270 |
| elongation (%) | 110 | 150 | 160 | 160 |
| hardness (SHORE A) | 85 | 80 | 79 | 79 |

| Plasma resistance (rate of weight decrease, %) | | | | |
|---|---|---|---|---|
| O₂ plasma | 0.97 | 2.15 | 1.47 | 1.47 |
| CF₄ plasma | 0.94 | 1.20 | 1.29 | 1.29 |

| Remote plasma resistance (rate of weight decrease, %) | | | | |
|---|---|---|---|---|
| NF₃ plasma | 0.07 | 0.05 | 2.27 | 2.27 |

As seen in Table 1, the weight in composition (comparative example 1) including carbon black as a filler decreases largely by O₂ plasma irradiation and CF₄ plasma irradiation, the weight in composition (comparative example 2) including θ alumina decreases largely by NF₃ plasma irradiation and O₂ plasma irradiation and CF₄ plasma irradiation. The weight decrease in the fluorine-containing elastomer composition of the present invention is extremely little in all of plasma irradiation of NF₃, O₂, and CF₄, and exhibits excellent plasma resistance.

### INDUSTRIAL APPLICABILITY

According to the present invention, by compounding a carbon allotrope having an average primary particle size of at most 0.1 µm (except for amorphous carbon) into fluorine-containing elastomer, the weight decrease at all of plasma treatments of NF₃, O₂, and CF₄, which are conducted in a manufacturing process of a semiconductor is small, and plasma resistance can be improved outstandingly.

## Claims

1. A fluorine-containing elastomer composition comprising a fluorine-containing elastomer and a carbon allotrope (except for amorphous carbon) having an average primary particle size of at most 0.1 µm.

2. The fluorine-containing elastomer composition of Claim 1, wherein the carbon allotrope having an average primary particle size of at most 0.1 µm is diamond.

3. The fluorine-containing elastomer composition of Claim 1 or 2, wherein the fluorine-containing elastomer is a perfluoroelastomer.

4. The fluorine-containing elastomer composition for a semiconductor manufacturing equipment of Claim 1, 2, or 3.

5. A molded article comprising the fluorine-containing elastomer composition of Claim 1, 2, 3 or 4.

6. A sealing material comprising the fluorine-containing elastomer composition of Claim1, 2, 3 or 4.

7. A filler for a sealing material in a semiconductor manufacturing equipment comprising a carbon allotrope (except for amorphous carbon) having an average primary particle size of at most 0.1 µm.
